# EUROPEAN PATENT APPLICATION

(11) **EP 1 413 435 A1**
(43) Date of publication of application: **28.04.2004**
(21) Application number: 03256609.3
(22) Date of filing: 21.10.2003
(51) Int. Cl.: B41J 2/05

(54) **Firing nozzles of a printer**

(30) Priority: 22.10.2002 KR 2002064589
(71) Applicant: SAMSUNG ELECTRONICS CO., LTD., Suwon-City, Kyungki-do (KR)
(72) Inventor: Kim, Kyu-sung, Yongin-city Gyunggi-do (KR)
(74) Representative: Geary, Stuart Lloyd

(57) **Abstract**

A device for providing data for plural firing nozzles of a printer, comprises a data processing unit 100, providing input data , and a fire pulse. The input data comprises simultaneous firing nozzle data and data for determining a nozzle group firing direction, and is carried on a single data line 110. A fire pulse line 113 carries the fire pulse. The serial data is converted to parallel data, and bits for determining the simultaneous firing nozzles are separated from a bit which determines the nozzle group firing order by a first plurality of memories 120. A bi-directional shift register 160 generates firing nozzle group selection signals. The bi-directional shift register has parallel outputs which are changed by shifting a preset value left or right based on a latch clock and the firing order bit. A selection unit 130, 140 selects simultaneous firing nozzles based on the simultaneous firing nozzle data and the fire pulse; and a unit 150 fires the selected simultaneous firing nozzles based on the firing nozzle group selection signals. Logic operations in the printer head are simplified, a number of connections is reduced, and interface signals between the printer head and the printer main body are minimised.

## Description

A first aspect of the invention relates to a method of transmitting data for a printer head, the method comprising: supplying data specifying simultaneously firing nozzles on a data line; supplying data specifying a nozzle group firing direction on a data line; selecting simultaneous firing nozzles based on the simultaneous firing data; generating nozzle group selection signals to specify nozzle groups; and firing nozzles which are both selected based on the simultaneous firing data and are specified by the nozzle group selection signals.

A second aspect of the invention relates to a device for providing data for plural firing nozzles of a printer, the device comprising: a data processing unit arranged to provide: input data comprising simultaneous firing nozzle data and data for determining a nozzle group firing direction, and a fire pulse; a fire pulse line for carrying the fire pulse; a selection unit for selecting simultaneous firing nozzles based on the simultaneous firing nozzle data and the fire pulse; and a unit which fires the selected simultaneous firing nozzles based on firing nozzle group selection signals.

A third aspect of the invention relates to a device for generating signals for simultaneously firing nozzles of a printer head, the printer head comprising X groups of nozzles with Y nozzles in a group, where X and Y are integers.

A fourth aspect of the invention relates to a method of generating simultaneous firing nozzle signals for a printer head, the printer head comprising X groups of nozzles with Y nozzles in a group, where X and Y are integers.

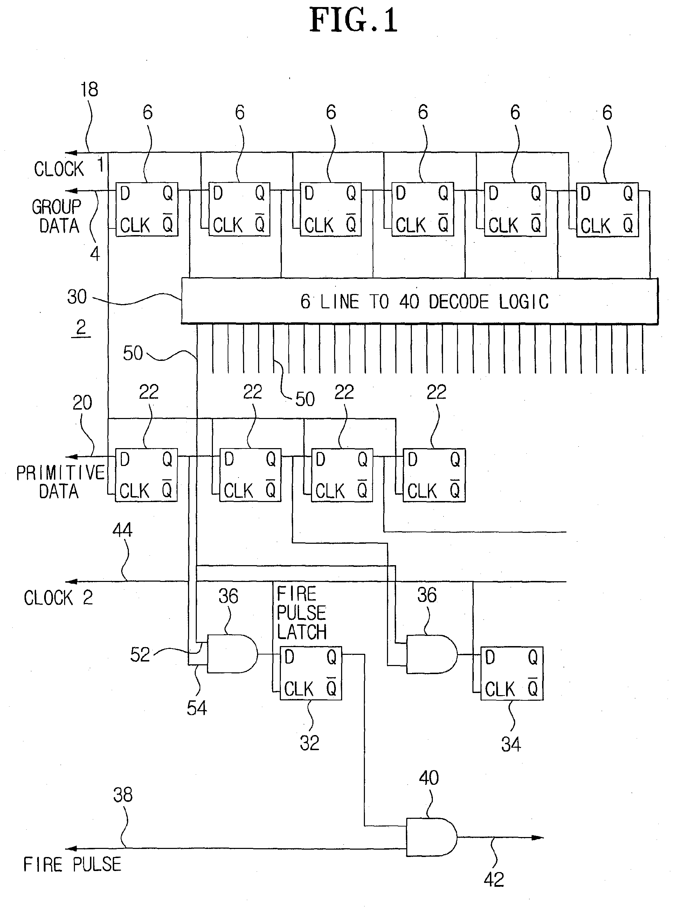

Figure 1 is a view for showing a device for driving a conventional printer head, which is disclosed in U.S. Patent 6,312,079.

In Figure 1, the printer driving device has a group data line 4 for selecting a nozzle group, a primitive data line 20 for selecting nozzles to be fired at the same time, a first clock 1 line 18 for shifting the group data and the primitive data in a shift latch, and an interface signal for a fire pulse 38. The printer has a first plurality of memories 6 for storing serial group selection data and a second plurality of memories 22 for storing serial primitive data, and additionally has a decoder 30 for decoding the serial group data and AND gates 36 for carrying out AND-operations with first memory data 52 and second memory data 54. Further, a second clock 2 feeds a clock line 44 to latch the outputs of the AND gates 36 using a fire pulse latch 32.

The output of the fire pulse latch 32 is logic-ANDed with the fire pulse 38 through an AND gate 40, and the output of the AND gate 40 is applied to the gate of a driving FET (not shown) for its head nozzle. Such a printer selects a nozzle group through the group data line 4, and stores firing data in the first plurality of memories 6 and the second plurality of memories 22 through the primitive data line 20 synchronously with the first clock 1. The serial nozzle group selection data stored in the first plurality of memories 6 selects one nozzle group through the decoder 30. The firing data stored in the second plurality of memories 22 is ANDed with the nozzle group selection data and then latched synchronously with a signal of the second clock 2. Such latched data is ANDed with the fire pulse 38, and the result transmitted to the gate of the driving FET for each nozzle. Accordingly, only the nozzles in selected nozzle groups are fired.

Since there are as many fire pulse latches 32 latching firing data and AND gates 36 as there are nozzles of the printer head, the device is fairly complicated.

The invention seeks to reduce the number of interface signals between a printer head and a printer, to simplify connection thereof, and to simplify logic operations in the printer head.

The first aspect of the invention is characterised in that the data specifying simultaneously firing nozzles is supplied on the same data line as the data line specifying a nozzle group firing direction.

The second aspect of the invention is characterised in comprising:
a firing group direction data line for carrying the input data; and
a bi-directional shift register for generating the firing nozzle group selection signals.

The third aspect of the invention is characterised in that the device comprises:
a data processing unit for providing:
   serial input data comprising Y bits defining specific nozzles of a group to be fired simultaneously and an additional bit,
   a shift clock,
   a latch clock, and
   a fire pulse;
a converter for providing the Y bits and the additional bit as parallel data in response to the shift clock;
a Y bit latch for latching the parallel Y bits in response to the latch clock;
a first logic AND unit for logically ANDing the parallel Y bits and the fire pulse, to provide Y nozzle selection signals;
a bi-directional shift register having a shift direction input, and parallel outputs comprising an MSB, an LSB and X outputs between the MSB and the LSB, wherein values of the X parallel outputs are arranged to be shifted in response to the latch clock and the additional bit; and
a second logic AND unit for logically ANDing the X outputs with the Y nozzle selection signals to provide the simultaneous firing nozzle signals.

The fourth aspect of the invention is characterised in that the method comprises:
providing serial input data comprising Y bits which define specific nozzles of a group to be fired simultaneously and an additional bit,
converting the Y bits and the additional bit to parallel data in response to a shift clock;
latching the parallel Y bits in response to a latch clock;
deriving from a predetermined value loaded into a bi-directional shift register X bits in parallel and providing them at an output;
shifting the value of the parallel outputs of the bi-directional shift register in response to the latch clock and the additional bit, the direction of the shift being controlled by the additional bit;
logically ANDing each of the latched Y bits with a fire pulse and with each of the X bits to provide the simultaneous firing nozzle signals.

An embodiment of the invention will now be described, by way of example only, with reference to the accompanying drawings, in which:
Figure 1 is a schematic view of a conventional device for driving a printer head;
Figure 2A and 2B are schematic views of different components of an apparatus for serial data/address transmission device according to the invention;
Figure 3 is a table illustrating logic operations of the part of the apparatus shown in Figure 2B; and
Figure 4 is a flow chart illustrating operation of the apparatus of Figures 2A and 2B.

In the drawings, like reference numerals are used to denote like elements throughout.

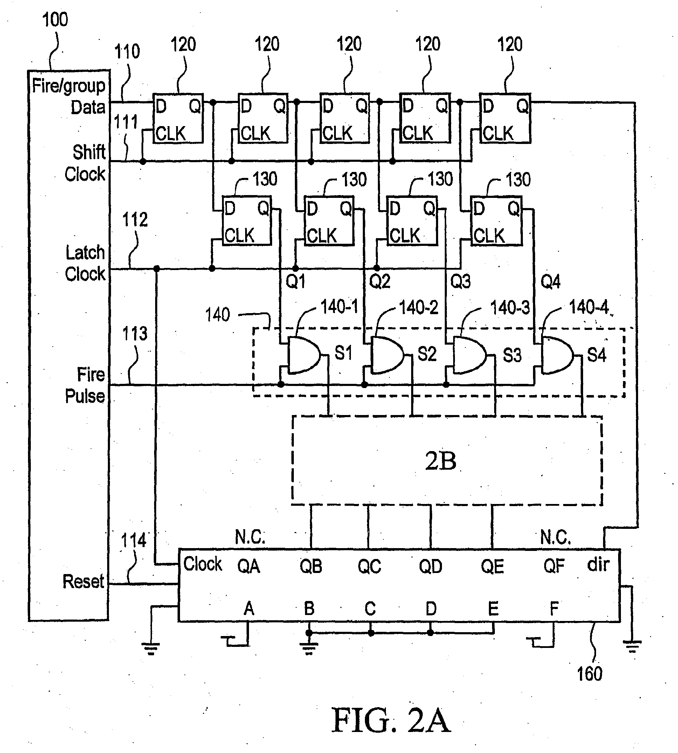

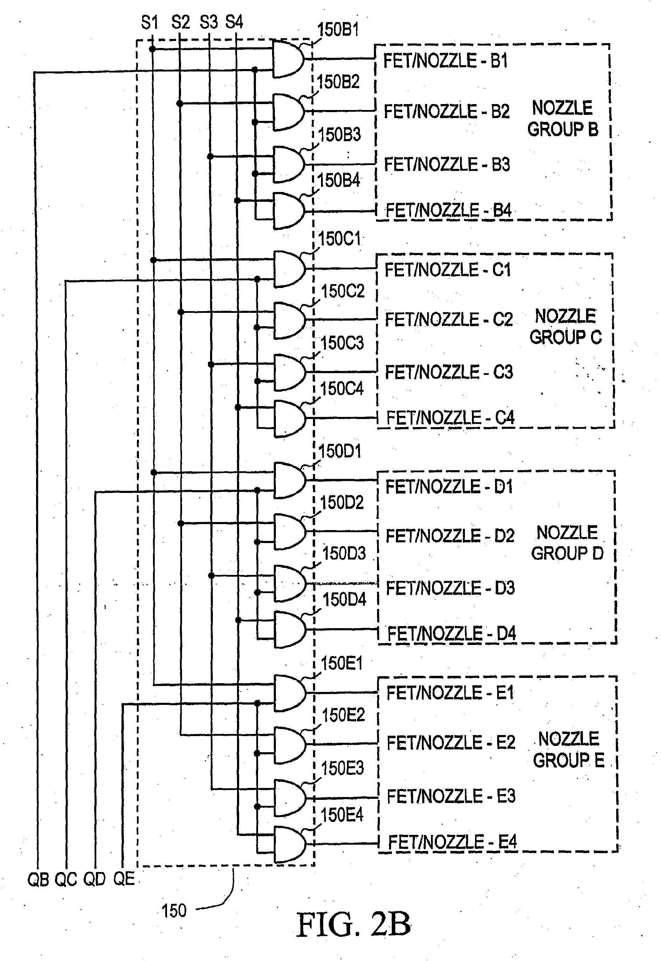

Figures 2A and 2B are block diagrams schematically showing a serial data/address transmission device for a printer head according to the invention. As shown in Figures 2A and 2B, the serial data/address transmission device comprises a data processor 100, and a printer head. The printer head comprises a first plurality of memories 120, a second plurality of memories 130, a first logic AND unit 140, a second logic AND unit 150, and a bi-directional shift register 160. The data processor 100 provides input data to the printer head. The input data comprises data specifying nozzles to be fired at the same time and data for determining a firing order of nozzle groups to be fired (which can be termed nozzle group direction data) through a fire/group direction data line 110. A fire pulse, which determines final firing, is provided to the printer head through the fire pulse line 113. A shift clock to latch data is provided to the printer head through a shift clock line 111 in order to store the input data in the first plurality of memories 120. A latch clock for latching nozzle group data is provided to the printer head through the latch clock line 112.

The first plurality of memories 120 store the input data, which is sequentially latched by the shift clock 111. The number of the first plurality of memories 120 is one greater than the number of simultaneous firing nozzles in order to provide the direction data of a firing group to a port (dir) of the bi-directional shift register 160. This embodiment comprises four nozzles, for the purposes of illustration.

When the firing direction data and the firing nozzle data is all latched to the first plurality of memories 120, the second plurality of memories 130 latch the firing nozzle data, synchronising the outputs (Q) of the first plurality of memories 120 with the latch clock of the latch clock line 112, thereby determining and providing simultaneous firing nozzle signals, Q1, Q2, Q3, Q4. The number of the second plurality of memories 130 is equal to the number of the simultaneous firing nozzles.

The first logic AND unit 140 ANDs the firing nozzle signals Q1, Q2, Q3, Q4 provided by the second plurality of memories 130 with the fire pulse to arrive at final firing signals S1, S2, S3 and S4, for firing the simultaneous firing nozzles. The number of individual AND gates (140-1, 140-2, 140-3, 140-4) in the first logic AND unit 140 is equal to the number of simultaneous firing nozzles.

The bi-directional shift register 160 provides signals at outputs except for its MSB and LSB, in order to select a number of the nozzle groups (four groups in the embodiment) from the outputs of the nozzle group selection signals QB, QC, QD and QE. The bi-directional shift register 160 is loaded with data having an MSB of "1" and an LSB of "1" and the bits inbetween having "0". The data loading is performed in every slice. The data is shifted synchronously with the latch clock of the latch clock line 112. With the data is shifted, the nozzle group selection data is fed to the second AND unit 150 with the generation of a signal selecting only one nozzle group from the four nozzle groups QB - QE. The shift direction is determined by the nozzle group direction data provided to the port "dir" from the data latched through the fire/group direction data line 110.

The second AND unit 150 ANDs the firing nozzle group selection signals (QB, QC, QD, QE) fed from the bi-directional shift register 160 with the outputs (S1, S2, S3, S4) of the first logic AND unit 140, to provide simultaneous firing nozzle signals for a selected nozzle group, so that the selected nozzle signals are connected to respective gates of corresponding FETs be fired (B1-B4, C1-C4, D1-D4, E1-E4).

As seen from Figure 2B, the output S1 of the first logic AND unit 140 is connected to a first input of each of AND gates 150B1, 150C1, 150D1, and 150E1. Similarly, the output S2 of the first logic AND unit 140 is connected to a first input of each of AND gates 150B2, 150C2, 150D2 and 150E2; the output S3 of the first logic AND unit 140 is connected to a first input of each of AND gates 150B3, 150C3, 150E3; and the output S4 of the first logic AND unit 140 is connected to a first input of each of AND gates 150B4, 150C4, 150D4 and 150E4.

The output QB of the bi-directional shift register 160 is connected to a second input of each of AND gates 150B1, 150B2, 150B3 and 150B4; the output QC of the bi-directional shift register 160 is connected to a second input of each of AND gates 150C1, 150C2, 150C3, 150C4; the output QD of the bi-directional shift register 160 is connected to a second input of each of AND gates 150D1, 150D2, 150D3, 150D4; and the output QE of the bi-directional shift register 160 is connected to a second input of each of AND gates 150E1, 150E2, 150E3, 150E4

In order for the first and the second nozzles of nozzle group QC to be fired simultaneously, the first logic AND unit outputs a "1" at S1 and S2, the selection signal QC is output as "1" from the bi-directional shift register 160, and the second logic AND unit outputs a "1" at the outputs of AND gates 150C1 and 150C2.

The first logic AND unit 140 is provided with as many AND gates as there are groups of head nozzles. The groups of head nozzles are connected to the nozzle group selection signals QB to QE of the bi-directional shift register 160 via the second AND unit 150.

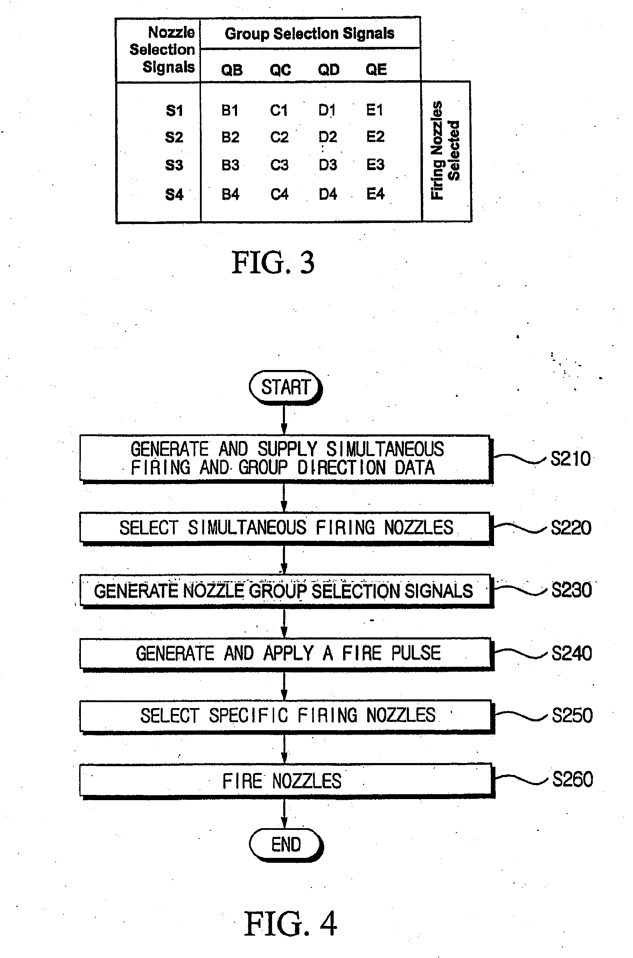

The nozzle groups are selected in an order B C D E or E D C B according to the signal dir output from the first plurality of memories 120. A summary of the logic operations of the second AND unit 150 is shown in Figure 3.

Figure 4 is a flow chart for explaining a operation according to the present invention. In Figure 4, the data processor 100 generates and supplies data determining simultaneous firing nozzles and a nozzle group firing direction (S210). The simultaneous firing nozzles are selected based on the data provided through the fire/group direction data line 110. The data provided through the fire/group direction data line 110 to the first plurality of memories 120 is latched at operation 220 synchronously with the shift clock 111 generated by the data processor 100. Data for firing the simultaneous firing nozzles is stored in the second plurality of memories 130 synchronously with the output of the first plurality of memories 120 and the latch clock provided through the latch clock line 112 of the data processor 100. The bi-directional shift register 160 provides signals selecting nozzle groups (four groups in the embodiment) from the outputs of the nozzle group selection signals QA to QF as the inputs of the second AND unit 150 synchronously with a latch clock provided from the latch clock line 112 at operation 230. Meanwhile, a generated fire pulse signal is supplied through the fire pulse line 113 at operation S240. The simultaneous firing nozzle data outputted from the second plurality of memories 130 is ANDed in the first logic AND unit 140 synchronously with the fire pulse line 113 provided from the data processor 100, so that the simultaneous firing nozzles are selected at operation S250. Accordingly, the second AND unit 150 ANDs the outputs of the first logic AND unit 140 with the nozzle group selection signals (QB-QE) of the bi-directional shift register 160. Each output of the second AND unit 150 is applied to a gate of a respective FET driving a respective nozzle, so that the selected nozzle is fired, at operation S260. Further, printing is effected with the repetitive performance of operations S210 through S260.

The described embodiment simplifies the connection between the printer head and the printer main body. The interface signals are minimised. This helps to prevent malfunctions, and to simplify logic operations in the printer head. Simplifying the logic unit for the printer head can allow its size to be reduced.

It will be appreciated by those skilled in the art that the invention is not limited by the above embodiment, but that various changes may be made without departing within the scope of the invention. The scope is limited only by the appended claims.

## Claims

1. A method of transmitting data for a printer head, the method comprising:
supplying (S210) data specifying simultaneously firing nozzles on a data line;
supplying (S210) data specifying a nozzle group firing direction on a data line;
selecting (S220) simultaneous firing nozzles based on the simultaneous firing data;
generating (S230) nozzle group selection signals to specify nozzle groups; and
firing (S260) nozzles which are both selected based on the simultaneous firing data and are specified by the nozzle group selection signals,
**characterised in that** the data specifying simultaneously firing nozzles is supplied on the same data line (110) as the data line specifying a nozzle group firing direction.

2. A method as claimed in claim 1, wherein the generating step comprises specifying nozzle groups by generating nozzle group selection signals from a bi-directional shift register (160).

3. A method as claimed in claim 1 or claim 2, wherein the selecting simultaneous firing nozzles step (S220) comprises selecting based on the simultaneous firing data and on a fire pulse.

4. A method as claimed in any preceding claim, wherein the selecting simultaneous firing nozzles step (S220) comprises:
logical-ANDing nozzle firing signals and the nozzle group selection signals.

5. A method as claimed in claim 1 or claim 2, wherein the selecting simultaneous firing nozzles step comprises:
storing in a first plurality of memories (120) the firing group data and direction data synchronously with a shift clock (111);
storing outputs of the first plurality of memories (120) in respective ones of a second plurality of memories (130) synchronously with a latch clock (112); and
logical-ANDing respective outputs of the second plurality of memories and the fire pulse signal to generate nozzle firing signals.

6. A method according to claim 1 or claim 2, comprising:
latching the data supplied through the data line (110) to a first plurality of memories (120) synchronously with a shift clock;
storing data for specifying the simultaneous firing nozzles in a second plurality of memories (130) synchronously with the latched outputs of the first plurality of memories (120) and a latch clock;
providing signals for selecting nozzle groups synchronously with the latch clock,
logical-ANDing data provided by the second plurality of memories (130) synchronously with a fire pulse to generate the simultaneous firing data; and
logical-ANDing the stored simultaneous firing nozzle data and the nozzle group selection signals, and applying the result as driving signals to the gates of FETs driving nozzles, to fire the selected nozzles.

7. A device for providing data for plural firing nozzles of a printer, the device comprising:
a data processing unit (100) arranged to provide:
input data comprising simultaneous firing nozzle data and data for determining a nozzle group firing direction, and
a fire pulse;
a fire pulse line (113) for carrying the fire pulse;
a selection unit (120, 130, 140) for selecting simultaneous firing nozzles based on the simultaneous firing nozzle data and the fire pulse; and
a unit (150) which fires the selected simultaneous firing nozzles based on firing nozzle group selection signals,
**characterised in** comprising:
a firing group direction data line (110) for carrying the input data; and
a bi-directional shift register (160) for generating the firing nozzle group selection signals.

8. A device as claimed in claim 7, in which the selection unit comprises:
a first unit (120, 130) for selecting the simultaneous firing nozzles based on the simultaneous firing nozzle data and the data for determining a nozzle group firing direction; and
a second unit (140, 150) for selecting specific firing nozzles through the unit (130) based on the fire pulse.

9. A device as claimed in claim 8, in which the second unit (140) comprises a first plurality of logic AND gates (140-1, 140-2, 140-3, 140-4), each for logically-ANDing a respective part of the simultaneous firing nozzle data with the fire pulse signal, the number of the logic AND gates being the same as the number of simultaneous firing nozzles.

10. A device as claimed in claim 9, wherein the second unit (140) further comprises a second plurality of logic AND gates, each for logically-ANDing an output of a respective one of the plurality of first logic AND gates and a nozzle group selection signals, the number of the second plurality of logic AND gates being the same as a total number of nozzles.

11. A device as claimed in any of claims 7 to 10, wherein the selection unit comprises:
a first plurality of memories (120) for storing the simultaneous firing nozzle data and the nozzle group firing direction data, the number of the first plurality of memories being one greater than the number of simultaneous firing nozzles.

12. A device as claimed in any of claims 7 to 11, wherein the selection unit further comprises:
a second plurality of memories (130) for storing the simultaneous firing nozzle data, the number of the second plurality of memories being the same as the number of simultaneous firing nozzles.

13. A device for generating signals for simultaneously firing nozzles of a printer head, the printer head comprising X groups of nozzles with Y nozzles in a group, where X and Y are integers,
**characterised in that** the device comprises:
a data processing unit (100) for providing:
serial input data comprising Y bits defining specific nozzles of a group to be fired simultaneously and an additional bit,
a shift clock,
a latch clock, and
a fire pulse;
a converter (120) for providing the Y bits and the additional bit as parallel data in response to the shift clock;
a Y bit latch (130) for latching the parallel Y bits in response to the latch clock;
a first logic AND unit (140) for logically ANDing the parallel Y bits and the fire pulse, to provide Y nozzle selection signals;
a bi-directional shift register (160) having a shift direction input, and parallel outputs comprising an MSB, an LSB and X outputs between the MSB and the LSB, wherein values of the X parallel outputs are arranged to be shifted in response to the latch clock and the additional bit; and
a second logic AND unit (150) for logically ANDing the X outputs with the Y nozzle selection signals to provide the simultaneous firing nozzle signals.

14. The device of claim 13, wherein:
the MSB and the LSB of the bi-directional shift are each initially preloaded with data of "1" prior to the values of the X parallel outputs being shifted.

15. The device of claim 13 or claim 14, wherein values of the X parallel outputs are arranged to be shifted in a first direction where the additional bit has a value of 1 and to be shifted in a second direction where the additional bit has a value of 0.

16. The device of any of claims 13 to 15, wherein the first logic AND unit comprises Y AND gates.

17. The device of any of claims 13 to 16, wherein the second logic unit comprises X*Y AND gates.

18. A method of generating simultaneous firing nozzle signals for a printer head, the printer head comprising X groups of nozzles with Y nozzles in a group, where X and Y are integers,
**characterised in that** the method comprises:
providing (S210) serial input data comprising Y bits which define specific nozzles of a group to be fired simultaneously and an additional bit,
converting (S220) the Y bits and the additional bit to parallel data in response to a shift clock;
latching the parallel Y bits in response to a latch clock;
deriving from a predetermined value loaded into a bi-directional shift register X bits in parallel and providing them at an output;
shifting the value of the parallel outputs of the bi-directional shift register in response to the latch clock and the additional bit, the direction of the shift being controlled by the additional bit;
logically ANDing (S260) each of the latched Y bits with a fire pulse and with each of the X bits to provide the simultaneous firing nozzle signals.

19. The method of claim 18, further comprising:
providing the X bits and an MSB and an LSB from the bi-directional shift register, and
loading a 1 into each of the MSB and the LSB and loading a 0 into each of the X bits as the predetermined value.

20. A method of transmitting serial data/addresses for a printer head, comprising:
generating and supplying data for determining simultaneous firing nozzles and a nozzle group firing direction through a fire/group direction data line;
selecting simultaneous firing nozzles based on the data provided through the fire/group direction data line;
generating nozzle group selection signals from a bi-directional shift register to select nozzle groups;
generating and providing a fire pulse to fire the selected nozzles;
selecting specific firing nozzles based on the fire pulse; and
applying the specific firing nozzles to the selected nozzle groups to fire the selected nozzles.

21. A method of transmitting serial data/addresses for a printer head comprising:
generating and supplying data for determining simultaneous firing nozzles and a nozzle group firing direction through a fire/group direction data line;
latching the data supplied through the fire/group direction data line to first memories in synchronisation with a shift clock;
storing data for determining the simultaneous firing nozzles in second memories in synchronisation with the latched outputs of the first memories and a latch clock;
outputting signals for selecting nozzle groups from a bi-directional shift register in synchronisation with the latch clock provided from the latch clock line,
ANDing the simultaneous firing nozzle data outputted from the second memories in synchronisation with a fire pulse to generate the simultaneous firing data; and
ANDing the stored data for determining simultaneous firing pulses and the nozzle group selection signals of the bi-directional shift register to apply driving signals to the gates of FETs driving nozzles so that selected nozzles are fired.

22. The method as claimed in claim 1 or claim 2, wherein the selecting of the simultaneous firing nozzles comprises:
storing in first memories the firing group data and direction data in synchronisation with a shift clock;
storing outputs of the first memories in respective second memories in synchronisation with a latch clock; and
ANDing respective outputs of the second memories and the fire pulse signal to generate nozzle firing signals.

23. The method as claimed in claim 22, wherein the selecting of the specific firing nozzles comprises:
ANDing the nozzle firing signals and the outputs of the nozzle group selection signals of the bi-directional shift register.

24. A device for transmitting serial data/addresses for a printer head in an interface unit transmitting firing information to the printer head with plural firing nozzles, comprising:
a data processing unit which provides:
input data comprising simultaneous firing nozzle data and data for determining a nozzle group firing direction, and
a fire pulse;
a firing group direction data line which provides the input data to the printer head;
a fire pulse line which provides the fire pulse to the printer head;
a selection unit which selects simultaneous firing nozzles based on the simultaneous firing nozzle data and the fire pulse;
a bi-directional shift register which generates firing nozzle group selection signals; and
a unit which fires the selected nozzles based on the firing nozzle group selection signals.

25. A device for transmitting serial data/addresses for a printer head comprising:
a data processing unit which provides simultaneous firing nozzle data, data for determining a nozzle group firing direction, and a fire pulse;
a firing group direction data line which provides the data for determining the simultaneous firing nozzles and the nozzle group firing direction to the printer head;
a fire pulse line which provides the fire pulse to the printer head; a first selection unit which selects the simultaneous firing nozzles based on the fire/group firing direction data;
a second unit which selects specific firing nozzles through the first selection unit based on the fire pulse;
a bi-directional shift register which generates firing nozzle group selection signals; and
a firing unit which fires the specific nozzles selected based on the firing nozzle group selection signals.

26. The device as claimed in claim 24 or claim 25, wherein the selection unit further comprises:
first memories which store the simultaneous firing nozzle data and the nozzle group firing direction data, the first memories having one more in number than a number of the simultaneous firing nozzles.

27. The device as claimed in claim 24 or 25, wherein the selection unit further comprises:
second memories which store the simultaneous firing nozzle data, the second memories having a same number as a number of the simultaneous firing nozzles.

28. The device as claimed in claim 27, wherein the selection unit further comprises:
a first plurality of logic AND gates, each of which logic-ANDs a portion of the simultaneous firing nozzle data and the fire pulse signal, a number of the logic and gates being the same as a number of the simultaneous firing nozzles.

29. The device as claimed in claim 28, wherein the selection unit further comprises:
a second plurality of logic AND gates, each of which logic ANDs an output of one of the plurality of first logic AND gates and one of the nozzle group selection signals of the bi-directional shift register, a number of the second plurality of logic AND gates being the same as a number of the nozzles of the printer head.

30. A device for generating signals for simultaneously firing nozzles of a printer head, the printer head comprising X groups of nozzles with Y nozzles in a group, where X and Y are integers, the device comprising:
a data processing unit which provides:
serial input data comprising Y bits which define specific nozzles of a group to be fired simultaneously and an additional bit,
a shift clock,
a latch clock, and
a fire pulse;
a converter which outputs the Y bits and the additional bit as parallel data in response to the shift clock;
a Y bit latch which latches the parallel Y bits in response to the latch clock;
a first logic AND unit which logic ANDs each of the parallel Y bits and the fire pulse, to output Y nozzle selection signals;
a bi-directional shift register having a shift direction input, X+2 parallel outputs comprising an MSB, an LSB and X outputs between the MSB and the LSB, wherein values of the X parallel outputs are shifted in response to the latch clock and the additional bit;
a second logic AND unit which logic ANDs each of the X outputs with each of the Y nozzle selection signals to output the simultaneous firing nozzle signals.

31. The device of claim 30, wherein:
the MSB and the LSB of the bi-directional shift are each initially preloaded with data of "1" prior to the values of the X parallel outputs being shifted.

32. The device of claim 30, wherein values of the X parallel outputs are shifted in a first direction where the additional bit has a value of 1 and are shifted in a second direction where the additional bit has a value of 0.

33. The device of claim 30, wherein the first logic AND unit comprises Y AND gates.

34. The device of claim 30, wherein the second logic unit comprises X*Y AND gates.

35. A method of generating simultaneous firing nozzle signals for a printer head, the printer head comprising X groups of nozzles with Y nozzles in a group, where X and Y are integers, the method comprising:
providing serial input data to the printer head, the serial input data comprising Y bits which define specific nozzles of a group to be fired simultaneously and an additional bit,
converting the Y bits and the additional bit to parallel data in response to a shift clock;
latching the parallel Y bits in response to a latch clock;
loading a predetermined value into a bi-directional shift register and outputting X bits in parallel;
shifting the value of the parallel outputs of the bi-directional shift register in response to the latch clock and the additional bit, a direction of the shift being controlled by the additional bit;
logically ANDing each of the Y bits with a fire pulse and with each of the X bits to output the simultaneous firing nozzle signals.

36. The method of claim 35, further comprising:
outputting the X bits and an MSB and an LSB from the bi-directional shift register, and
loading a 1 into each of the MSB and the LSB and loading a 0 into each of the X bits as the predetermined value.
